# EUROPEAN PATENT SPECIFICATION

(11) **EP 4 322 324 B1**
(45) Date of publication and mention of the grant of the patent: **25.02.2026**
(21) Application number: 23165039.1
(22) Date of filing: 29.03.2023
(51) Int. Cl.: H01Q 1/22, H01Q 13/18, F21V 21/00, F21V 23/04, H02G 3/12, F21S 8/04, F21V 23/00, H01Q 1/00, H02G 3/08

(54) **INSTALLATION HOUSING**
INSTALLATIONSGEHÄUSE
BOÎTIER D'INSTALLATION

(30) Priority: 08.08.2022 EP 22189185
(43) Date of publication of application: 14.02.2024
(73) Proprietor: Zumtobel Lighting GmbH, 6850 Dornbirn (AT); Tridonic GmbH & Co. KG, 6851 Dornbirn (AT)
(72) Inventor: Block, Steffen, 6850 Dornbirn (AT); Lorenz, Stefan, 6850 Dornbirn (AT); Zengerle, Thomas, 6850 Dornbirn (AT); Mayrhofer, Markus, 6850 Dornbirn (AT)
(74) Representative: Beder, Jens

(56) References cited:
- EP-B1- 3 582 321
- JP-A- 2021 120 951
- US-A- 3 882 450
- US-A1- 2016 172 750
- US-A1- 2017 121 949
- US-A1- 2019 267 695

## Description

The invention relates to the installation of devices using radio transmission of control signals or other signals in building automation. More specifically, the invention relates to an installation housing arrangement for the integration of radio transmitter and/or receiver in a building structure or a building technology device.

In building automation, a controller often sends commands and control signals to lighting or other devices based on sensor signals indicating, for example, brightness, temperature, humidity, presence of persons and other essential elements, wherein the signals are transmitted by wireless link or cable. Radio transmission of information or data is usually performed by using separate transceivers connected by cable to the control and sensor devices or by transceiver modules integrated into the devices. These transmitters are often accommodated in a housing. Often, these housings are mounted in a building, for example in a ceiling while the housing is built. Later, the transmitter or the device including the transmitter, must be inserted into this housing.

Further, the system can support data transmission not related to the building automation or lighting control. US 2005/0242290 A1 discloses a lighting system, in which a wireless network module is integrated into a ceiling lamp to provide Internet access.

However, the quality and range of the radio connection depends on spatial conditions. In particular, if the transceiver is arranged within the building structure (e.g., a wall or ceilings made of reinforced concrete) or in a device (e.g., luminaire with metal housing) for example for aesthetic reasons, metallic components of the device or the building structure can affect the transmission range. On the other hand, the transceiver may interfere with other electronic components of the device in which it is installed. To prevent this, metallic and/or electronic components must be identified and, if necessary, protective measures (e.g., safety distance or shielding) must be taken. In addition, boundary surfaces between dielectric materials with very different dielectric constants (permittivity), such as air and concrete, can affect the transmission of the radio signal. Further, only providing an accommodation space in a housing in which the transmitting device is accommodated results in a high degree of uncertainty regarding the specific position of the device and may be even the direction in which radio signals are emitted. Additionally, radio signals generated within the device or transmitter pass a plurality of different materials (having different dielectric properties) which badly affect transmission quality.

US 2016/172 750 A1 discloses an antenna system that includes a ground plane and first and second antennas. A first isolator is disposed between the first and antennas. A second isolator extends outwardly from the ground plane.

US 2019/267 695 A1 discloses an antenna device including an antenna and a dielectric body. In an internal space which is constituted by plural faces including a first face which is an electrically conductive body, the antenna device is adapted to have a shape to be fit inside a hole in the first face. The antenna device is installed, not protruding from the hole to an outer space. The antenna and the dielectric body are placed in series between the internal space and the outer space.

JP 2021 120 951 A discloses an illuminating device that comprises a light emitting unit, and an appliance body to which the light emitting unit is attached. The appliance body has an attachment member in a building material. The light emitting unit has a semiconductor light-emitting element, a light-emitting element substrate, a power supply unit, a control unit and a support member. The control unit has an antenna and a radio control unit. The radio control unit is in the form of a substrate. The antenna is mounted on the substrate of the radio control unit. The radio control unit is provided on a second face and is separated from the power supply unit.

US 2017/121 949 A1 discloses a nozzle cap assembly including a nozzle cap configured to mount on a fire hydrant, a nozzle cap housing defining an inner surface and an outer surface, the inner surface defining a nozzle cap cavity within the nozzle cap; an antenna enclosure mounted to the nozzle cap, a portion of the antenna enclosure disposed external to the nozzle cap; and an antenna positioned within the antenna enclosure.

US 3 882 450 A discloses a lamp structure comprising: a base section; a shaft of insulating material located on said base section and extending upwardly from said base section; bus bar conductors embedded in a surface of said shaft, running lengthwise of said shaft, electrically connected to electricity carrying means which extend out of the lamp structure, and exposed sufficiently at the upper portion of said shaft so as to be able to make electrical contact with the snap conductive contacts of a light bulb socket; a light bulb socket contained within housing of insulating material, said housing being fit over the upper portion of said shaft; snap conductive contacts affixed to and extending below said socket and making electrical contact with said bus bar conductors and said shaft, said snap conductive contacts also making electrical contact with a spring contact in said socket adapted to transmit electric current to an electric bulb when said bulb is inserted into said socket so as to depress said spring contact; switching means for regulating current flow through said bus bar conductors to said light bulb socket.

EP 3 582 321 B1 discloses an Antenna roof module for mounting and fixing on a roofless distribution cabinet, wherein the housing of the antenna roof module comprises: an antenna in the antenna roof module, a roof element, a roof module frame below the roof element for attachment to the top of the roofless distribution cabinet, side walls between the roof module frame and the edges of the roof element, which consist at least partially, in particular completely, of an emS material, in particular plastic, which is permeable to the electromagnetic radiation, emS, which can be emitted or received by the antenna, upright support elements between the roof module frame and the edges of the roof element, wherein the antenna is a PCB antenna, and the PCB antenna is arranged in a cavity formed in one of the side walls or in one of the support elements or in the roof module frame.

It is an object of the invention to provide an arrangement, with which an electronic device comprising an antenna (radio transmitter and/or receiver) can be easily installed in a building structure or a building technology device with low effort and costs while improving radio propagation conditions for the electronic device housed in the installation frame through limitation of critical steps of the permittivity at boundary surfaces of different housing and otherwise surrounding materials.

This object is achieved by an installation housing arrangement and system according to the enclosed independent claim.

Advantageous features of the present invention are defined in the corresponding dependent claims.

According to the present invention, an installation housing arrangement comprises an installation housing for accommodating an electronic device comprising an antenna. The installation housing is configured for installation in a building structure or a building technology device. The arrangement further comprises a fastening means for fastening and positioning the electronic device within the installation housing. This is achieved by first inserting the fastening and positioning means into the installation housing. Then, or simultaneously with the fastening and positioning means, the device that shall transmit or receive radio signals is placed in the installation housing. Since the device is at least partially surrounded by the fastening means, the position of the device is defined within closed boundaries. Thus, transmission characteristics of the device are highly reproducible, because the position of the device relative to the installation housing only has small variations. The fastening means is made of a dielectric material that at least partially fills the installation housing, in particular preferably the entire propagation path of the emitted radio wave or radio wave to be received. Thus, an electromagnetic wave which is generated within the device shows improve propagation characteristics, because the propagation path of the electromagnetic wave comprises less critical steps of the permittivity at the boundary surfaces of the different materials.

The installation housing arrangement including the installation housing plus the fastening means of a dielectric material establishes an enclosure for the electronic device that provides defined transmitting and receiving conditions for the device's antenna(s), regardless of the local conditions at the installation site. In this way, the electronic device can be installed in a building structure or a building technology device with low effort and costs.

The dielectric material of the fastening means at least partially fills the installation housing so that, at least in a section of the installation housing, the space between the electronic device and the installation housing is completely filled with the dielectric material. It is preferred that completely filling the space between the electronic device and the installation housing wall is done at the wall towards which the radio signals are emitted (or received). In this way, there are no different dielectric materials, such as air and a holder for the electronic device, in the section located in a preferred transmission direction, and the dielectric material inwall can be adapted to the dielectric material on the outwall of the installation housing in order to reduce the difference between the permittivity of the dielectric material located inwall the installation housing and the permittivity of the dielectric material at least partially surrounding the installation housing. The fastening means can be designed in one or more parts, wherein at least some of the parts may be removable cuboids of different or the same size. The cuboids may be made of an elastic material that rests on the installation housing and electronic device to hold/clamp the device in the housing.

The electronic device can be Wi-Fi, Bluetooth, Thread or Matter transmitter that transmits radio signals, for example, using short-wavelength UHF radio waves in the ISM band from 2,4 to 2,485 GHz. The antenna can be a monopole antenna or a dipole antenna. The radio signals can be transferred between components of a lighting system or forwarded by the lighting system. The electronic device can be inserted into the installation housing by a manufacturer or by the installer on site.

The installation housing can be rectangular-shaped or cylindrical, for example. Preferably, the installation housing is a block-shaped scaffold framework, whose walls are closed with removable panels.

The installation housing comprises or can be formed by a plurality of housing walls, wherein one housing wall (e.g., the panel) is made of non-metallic material and the fastening means is laminar connected with the one housing wall.

The one housing wall (e.g., the panel) can be detachable from the installation housing.

The permittivity of the dielectric material increases or decreases continuously or gradually in the direction of a surface normal of the one housing wall.

The installation housing can comprise a reflector for reflecting a radio signal sent by the antenna and passed through the at least one housing wall. A housing wall made of metallic material can form the reflector.

The at least one housing wall can comprise a window or slot for emitting a radio signal sent by the antenna.

Alternatively or in addition, the at least one housing wall can comprise at least one projection configured to project from the building structure, wherein the at least one projection is made of a dielectric material with a permittivity equal to or greater than the permittivity of the dielectric material of the fastening means.

A boundary surface between the installation housing and its surroundings in the transmission direction can be formed to allow smooth transition of the permittivity. For this, the at least one projection may have a perimeter that decreases with the depth of penetration into the building structure. Preferably, the at least one projection is wedge, cone or pyramid shaped. The projection can be pressed into the building structure (plaster or wooden plate) or concreted in, where it can also serve as a spacer to the casing. The at least one projection can positioned at the window or the slot.

Preferably, the installation housing arrangement is configured to position the electronic device at different positions within the installation housing, which allows for optimal positioning of the respective electronic device using adapted fastening means. For this, the fastening means can comprise at least one removable insert (part) to position the electronic device and/or to adapt the fastening means to different sizes of the electronic device.

The installation housing accommodating an established the final system, wherein the antenna of the electronic device is configured to send and/or receive a radio signal having a wavelength λ. In order to suppress interference from metallic components of the building structure or the building technology device, the fastening means can be configured to position the electronic device so that the antenna has a preferred distance of ≥ λ/4 to at least one inner or outer wall of the installation housing.

The installation housing comprises an insertion aid for the electronic device. Specifically, a funnel-shaped insertion opening for the electronic device is formed by the fastening means, at least on one wall. When the fastening means is inserted in the installation housing, this funnel - shaped insertion opening is oriented towards the open wall of the installation housing.

In addition, the installation housing can comprise a removable cover for the funnel-shaped insertion opening, wherein the fastening means comprises a closing plug attached to the removable cover for closing the funnel-shaped insertion opening.

The fastening means can form a cavity into which the electronic device is substantially positively insertable.

The installation housing can further comprise a waveguide for transmitting a radio signal sent by the antenna, wherein the waveguide is at least partially formed by at least one housing wall of the plurality of housing walls.

The invention will now be explained in more detail with reference to the accompanying drawings, wherein:
- FIG. 1: shows an installation housing according to a first embodiment of the present invention in a sectional view,
- FIG. 2: shows the installation housing shown in FIG. 1 from a top view,
- FIG. 3: shows the installation housing shown in FIG. 2 with the cover plate open,
- FIG. 4: shows a lighting system comprising the installation housing shown in FIG. 1, and
- FIG. 5: shows an installation housing according to a second embodiment of the present invention from a top view,
- FIG. 6: shows an installation housing 1 according to a third embodiment of the present invention in a sectional view,
- FIG. 7: shows the installation housing shown in FIG. 6 in wall view, and
- FIG. 8: shows an installation housing 1 according to a fourth embodiment of the present invention in a sectional view.

The same features are denoted by the same reference signs throughout all figures.

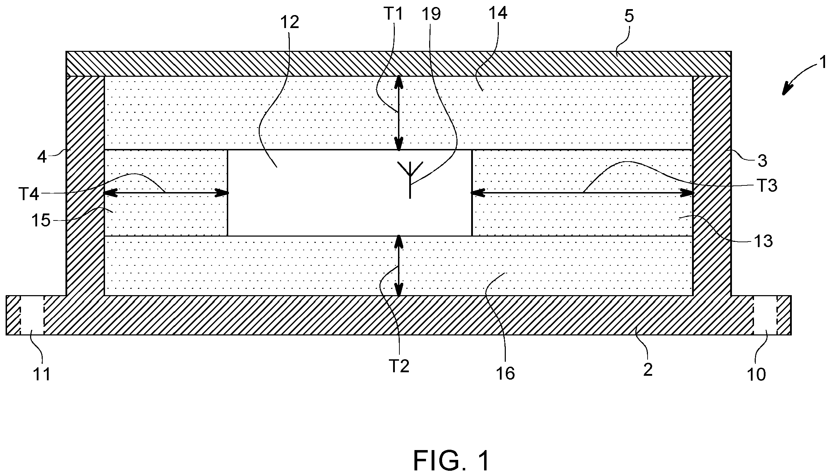

FIG. 1 shows an installation housing arrangement with an installation housing 1 according to a first embodiment of the present invention. The installation housing 1 shown in FIG. 1 has the shape of a rectangular block and consists of a base plate 2, four sidewalls 3, 4 and a removable cover plate 5, all of which are made of a non-conductive material. The base plate 2 can be casted in one piece with the four sidewalls 3, 4.

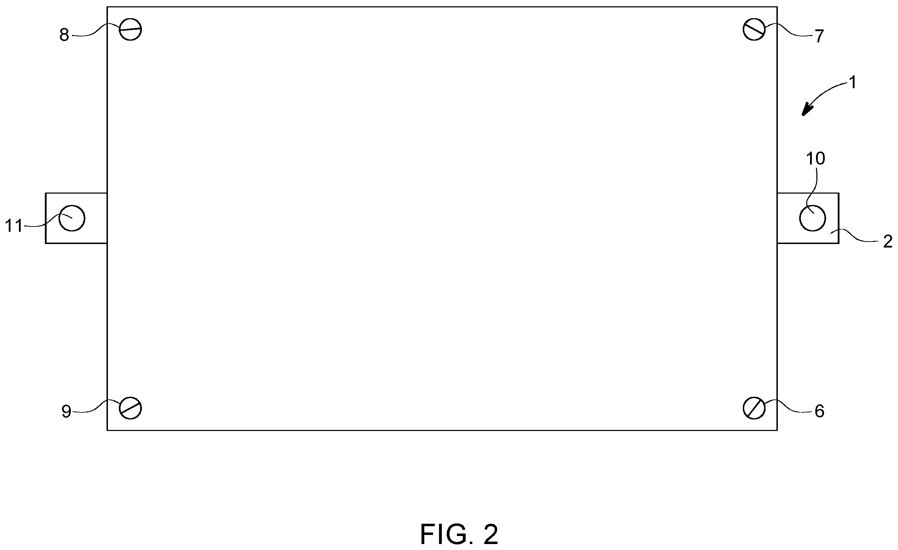

The cover plate 5 is mounted on the top of installation housing 1 with four screws 6..9 as shown in FIG. 2. The base plate 2 has two through-holes 10, 11 by means of which the installation housing 1 can be mounted in or to a building technology device or on a concrete formwork panel (not shown).

An RF transceiver 12 is enclosed by the installation housing arrangement, which is transparent to RF transmission/reception and provides a safety area around the transceiver 12 with respect to potential elements interfering with the RF transmission/reception. The installation housing 1 accommodates six cuboids 13..18 arranged around the transceiver 12 (cuboids 17..18 not shown) to establish the installation housing arrangement, and comprises cable bushing for power supply and data cables (not shown). All cuboids 13..18 are made of the same dielectric material to provide a homogeneous space within the installation housing 1 around the transceiver 12. In addition, the sizes of the cuboids 13..18 are selected to fix the transceiver 12 within the installation housing 1 at a desired position. At least some of the cuboids 13..18 can be exchanged for cuboids of a different size in order to adapt the installation housing 1 to electronic devices with a different size and/or a different antenna position.

Alternatively, instead of using a plurality of cuboids building the fastening means a smaller number of elements made from the dielectric material might be used. It is particularly possible to mold one part having a recess corresponding to the shape of the device that shall be accommodated in the installation housing and a corresponding lid.

The transceiver 12 is a Bluetooth, Thread, Matter or Wi-Fi transceiver that operates, for example, at 2,4 GHz and transmits a radio signal using a wavelength, for example, of λ of 125 mm. Other frequencies or transmission standards may be used as well. An antenna symbol 19 on the housing of the transceiver 12 marks an exemplary position of the antenna located in the RF transceiver 12, wherein the transceiver 12 shown in FIG. 1 is positioned so that the antenna of the transceiver 12 is located in the center of the installation housing 1. Alternatively, the transceiver 12 can be positioned so that the antenna or the housing of the transceiver 12 has a distance ≥λ/4 to each of the base plate 2, the sidewalls 3, 4 and the cover plate 5. This ensures that there are no metallic objects near the antenna when the installation housing 1 is installed at the site. The distance in which the transceiver is positioned relative to the housing wall 2 is defined by the thickness of cuboid 16 or the corresponding part of a molded dielectric material.

The distance between the transceiver 12 and the base plate 2 (and the cover plate 5) can be varied by varying the thickness T1 of the cuboid 17 and the thickness T2 of the cuboid 16 and the distance between the transceiver 12 and the sidewalls 3, 4 can be varied by varying the length T3 of the cuboid 13 and the length T4 of the cuboid 14.

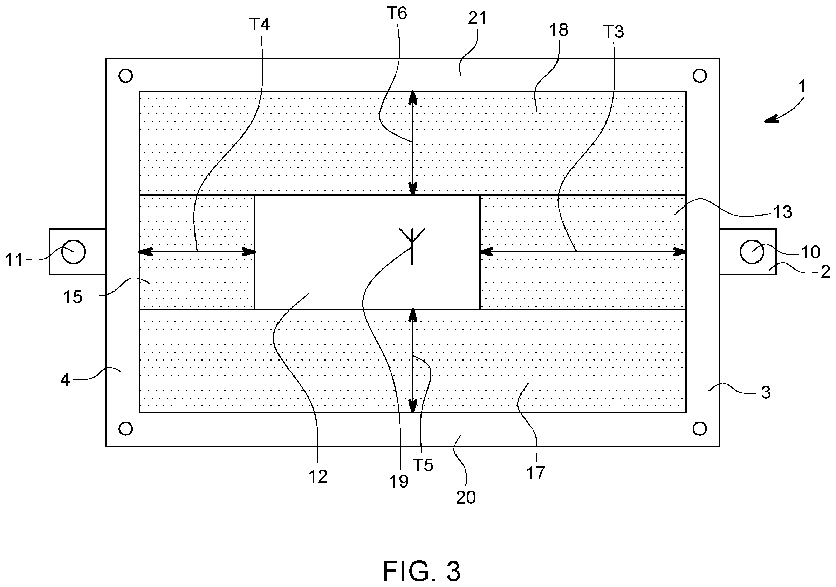

FIG. 3 shows the installation housing shown in FIG. 2 with the cover plate 5 open and the cuboid 14 removed. As shown in FIG. 3, the distance between the transceiver 12 and the sidewalls 20, 21 can be varied by varying the width T5 of the cuboid 17 and the width T6 of the cuboid 18. The cuboids 13..18 represent a fastening means for fastening and positioning the transceiver 12 within the installation housing 1. Alternatively, the fastening means can comprise only two parts enclosing the transceiver 12 or it can comprise more or fewer than six parts.

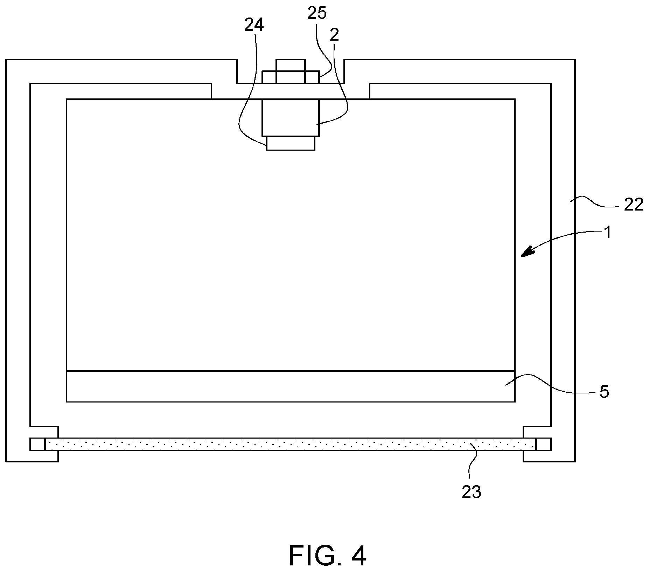

FIG. 4 shows the installation housing 1 installed in a mounting rail 22 for carrying luminaires and/or other devices. The metallic mounting rail 22 can be made of extruded metal or deep-drawn sheet metal and is covered on its lower side with a non-conductive plate 23. The installation housing 1 is fixed to the mounting rail 22 by a screw connection 24, 25 and encloses the transceiver 12, with which control and/or other signals can be transmitted to a receiver located in or outside the mounting rail 22. Alternatively or in addition, the transceiver 12 can receive a command to switch on/off luminaires mounted on the mounting rail 22 and output the command to a control unit/gear of the luminaires via cable (not shown).

The installation housing 1 shown in FIG. 1 is made of a non-conductive/metallic material that is transparent to radio transmission/reception in all directions. However, if a radio link is only between the transceiver 12 and a device located outside the mounting rail 19, radiation of the radio signal into the mounting rail 19 should be suppressed. For this purpose, a shield can be attached to the installation housing 1 that directs the radiation emerging from the sidewalls 3, 4 downward, i.e., towards the plate 23. Alternatively, the sidewalls 3, 4, 21, 22 or even the base plate 2 can be made of a metallic material (e.g., aluminum, steal), wherein the cover plate 5 is made of the non-conductive/metallic material. This also reduces interference to the transceiver 12 from EM fields generated by electronic devices located in the mounting rail 19.

The installation housing 1 can consist of exchangeable conductive/non-conductive walls (e.g., the sidewalls 3, 4, 21, 22, the base plate 2 and/or the cover plate 5) so that the combinations of conductive and/or non-conductive walls enables the installation housing 1 more flexibility and provides a large number of solutions for different applications. It is particularly preferred that, a conductive/metallic plate is attachable to at least one wall of the installation housing 1, which is made of a non-conductive/metallic material, by a clamp or screwed connection.

The installation housing 1 may be waterproof, which is advantageous when used in liquid concrete. Alternatively, the wall of the installation housing 1 that is located in a desired radiation direction (e.g., the cover plate 5 in FIG. 4) may be open or have an opening. Further, waveguiding structures (reflectors, slot-arrays ...) may be present in the installation housing 1 or may be attached to one or more of the walls.

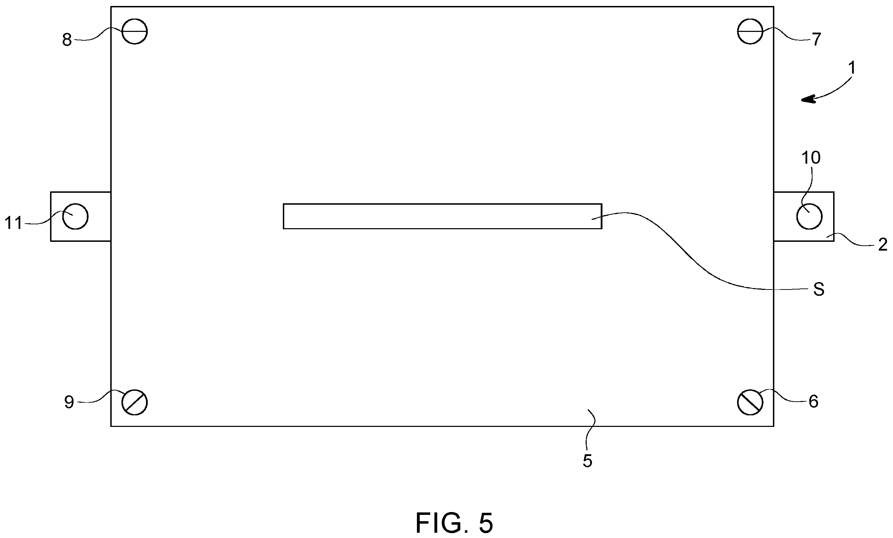

FIG. 5 shows an installation housing 1 according to a second embodiment of the present invention, in which the base plate 2, the four sidewalls 3, 4, 21, 22 (not shown) and the cover plate 5 are made of a metallic material, and the cover plate 5 comprises a slot S to radiate electromagnetic waves in a way similar to a dipole antenna. The installation housing 1 shown in FIG. 5 forms a slot antenna for emitting a radio signal sent by the antenna of the transceiver 12. Cover plates 5, each with a different orientation and/or size of slot, can be provided to adjust the radiation direction/characteristic to a given application/environment. Alternatively or in addition, the cover plate 5 can have a square shape so that the cover plate can be mounted rotated by 90 degrees and/or the cover plate 5 may have a plurality of different slots, wherein the slots that are not required can be closed or the slot that is required can be opened.

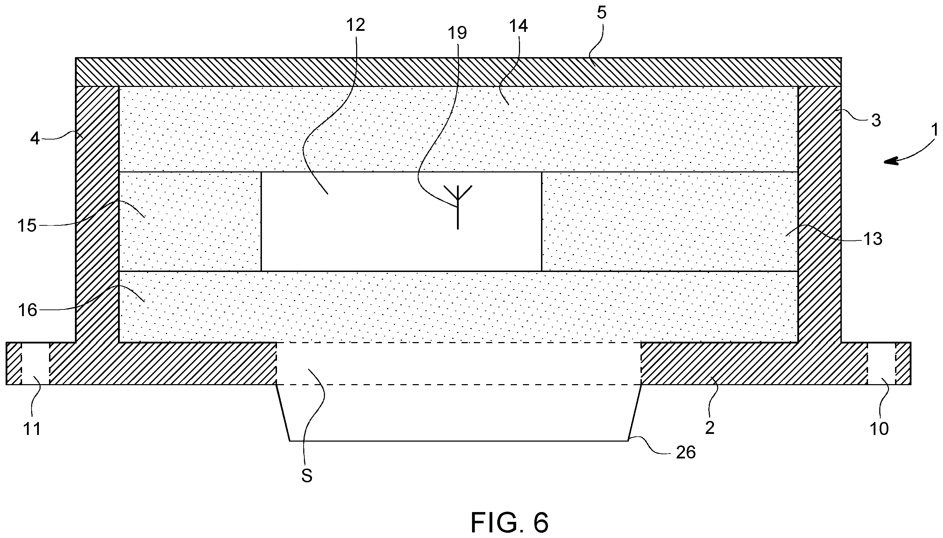

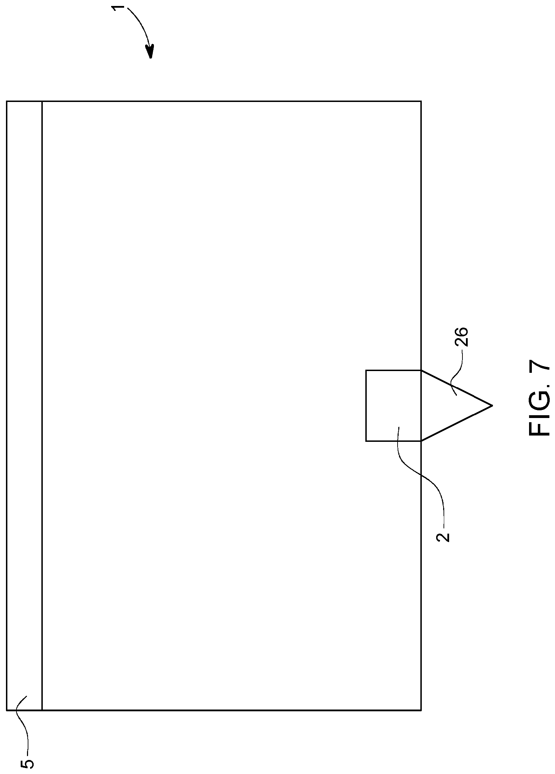

FIG. 6 shows an installation housing 1 according to a third embodiment of the present invention, in which the base plate 2, the four sidewalls 3, 4, 21, 22 and the cover plate 5 are made of the metallic material (sidewalls are 21, 22 not shown), and the base plate 2 comprises the slot S. The installation housing 1 shown in FIG. 6 is intended for mounting on a soft building substance, such as plaster or wood, and has a wedge 26 attached below the slot S. FIG. 7 shows the installation housing shown in FIG. 6 in wall view.

The installation housing 1 shown in FIG. 6 and FIG. 7 may be mounted, for example, on the top of a suspended ceiling, wherein the transceiver 12 sends signals to a receiver below the ceiling. The wedge 26 is made of a different dielectric material than the ceiling (building substance) and penetrates into the ceiling when the installation housing 1 is fixed with screws, allowing a smooth transition of permittivity between the installation housing 1 and the ceiling. The slot S can be filled with the dielectric material of the wedge 26 or the wedge 26 can extend into the slot S.

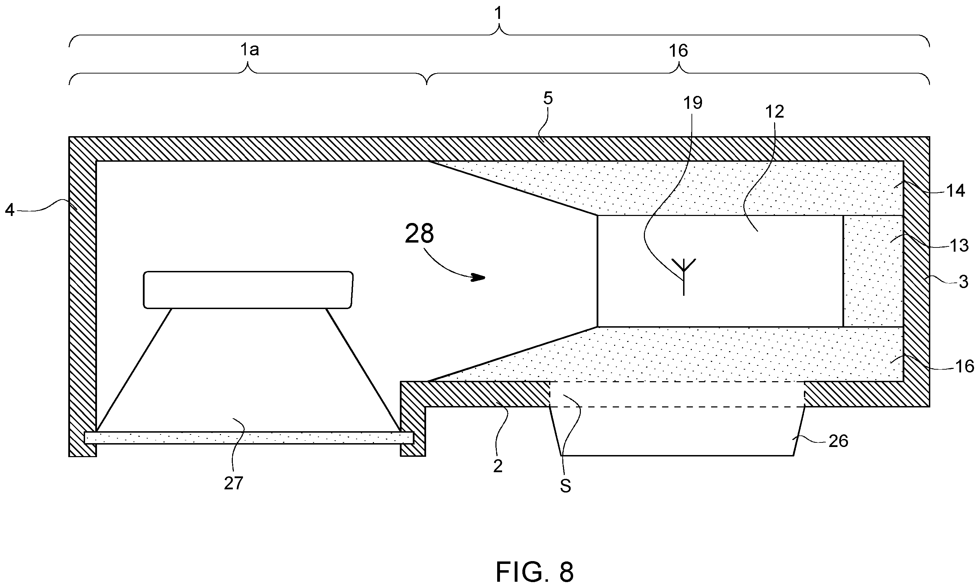

FIG. 8 shows an installation housing 1 according to a fourth embodiment of the present invention, which is intended for installation in (liquid) concrete. The installation housing 1 consists of a first part 1a, in which a luminaire insert can be mounted, and a second part 1b, in which the transceiver 12 can be inserted. For installation, e.g. in a concrete ceiling, the installation housing 1 including the cuboids 13, 14, 16..18 is placed with its underside on the formwork, whereby the wedge 26 covering the slot S additionally serves as a spacer to the formwork (not shown). After the concrete has cured and the formwork has been removed, the transceiver 12 is inserted first and then the luminaire insert 27 is mounted. To facilitate insertion of the transceiver 12 through the single opening of the installation housing 1, the ends of at least the cuboids 16 and 14 facing the opening are beveled. In this way, the ends form a funnel-shaped insertion opening 26. The cuboid 16 (not shown) can be formed as a closing plug for closing the funnel-shaped insertion opening 28.

The wedge 26 of the installation housing 1 shown in FIG. 6 and FIG. 8 covers the slot S. Alternatively, one or more wedge, cone and/or pyramid shaped projection can be arranged on a non-metallic housing wall without a slot S.

All cuboids 13..18 of the installation housing 1 shown in FIG. 1 to FIG. 8 have the same/constant permittivity. Alternatively, the permittivity can increase or decrease continuously or gradually in one cuboid or over several cuboids depending on the distance to the antenna or the distance to one of the base plate 2, a sidewall and the cover plate 5.

## Claims

1. An installation housing arrangement for accommodating an electronic device, comprising
an installation housing (1) is configured for installation in a building structure or a building technology device (22);
the installation housing (1) accommodates a fastening means (13..18) for fastening and positioning the electronic device (12) within the installation housing (1); and
the fastening means (13..18) is made of a dielectric material that at least partially fills the installation housing (1), wherein
the installation housing (1) comprises or is formed by a plurality of housing walls (2..4, 20, 21);
one housing wall of the plurality of housing walls (2..4, 20, 21) is at least partially made of non-metallic material; and
the fastening means (13..18) is laminar connected with the one housing wall, wherein the permittivity of the dielectric material increases or decreases continuously or gradually in the direction of a surface normal of the one housing wall; and **characterized in that**
the fastening means (13..18) comprises an funnel-shaped insertion opening (28) for the electronic device (12).

2. The installation housing arrangement according to claim 1, wherein
the installation housing (1) comprises a reflector for reflecting a radio signal.

3. The installation housing arrangement according to any claim 1 or 2, wherein
the one housing wall is detachable from the installation housing (1).

4. The installation housing arrangement according to any one of claims 1 to 3, wherein the one housing wall comprises a window or slot (S) for emitting a radio signal.

5. The installation housing arrangement according to any one of claims 1 to 4, wherein
the one housing wall comprises at least one projection (26) configured to project from an outer surface of the installation housing (1); and
the at least one projection (26) is made of a dielectric material with a permittivity equal to or greater than the permittivity of the dielectric material of the fastening means (13..18).

6. The installation housing arrangement according to claim 5, wherein
the at least one projection (26) has a perimeter that decreases with the depth of penetration into the building structure.

7. The installation housing arrangement according to claim 4 and 5 or 6, wherein
the at least one projection (26) is positioned at the window or the slot (S).

8. The installation housing arrangement according to any one of preceding claims, wherein
the fastening means (13..18) comprises at least one removable part to position the electronic device (12) at different positions within the installation housing (1) and/or to adapt the fastening means (13..18) to different sizes of the electronic device (12).

9. The installation housing arrangement according to any one of preceding claims, wherein
the installation housing (1) comprises a removable cover for the funnel-shaped insertion opening (28);
the fastening means (13..18) comprises a closing plug for closing the funnel-shaped insertion opening (28); and
preferably, the closing plug is attached to the removable cover.

10. The installation housing arrangement according to any one of preceding claims, wherein
the fastening means (13..18) forms a cavity into which the electronic device (12) is substantially positively insertable.

11. The installation housing arrangement according to any one of preceding claims, wherein
the installation housing (1) comprises a waveguide for transmitting a radio signal; and
the waveguide is at least partially formed by at least one housing wall of the plurality of housing walls (2..4, 20, 21).

12. A system comprising the installation housing arrangement according to any the preceding claims, wherein
the installation housing (1) accommodates an electronic device (12) comprising an antenna; and
the antenna is configured to send and/or receive a radio signal having a wavelength λ; and
the fastening means (13..18) is configured to position the electronic device (12) so that the antenna has a minimum distance of λ/4 to at least one inner or outer wall of the installation housing (1).

## Patentansprüche

1. Installationsgehäuseanordnung zur Aufnahme eines elektronischen Geräts, umfassend ein Installationsgehäuse (1), das zur Installation in einer Gebäudestruktur oder einem gebäudetechnischen Gerät (22) konfiguriert ist; wobei das Installationsgehäuse (1) ein Befestigungsmittel (13 .. 18) zum Befestigen und Positionieren des elektronischen Geräts (12) innerhalb des Installationsgehäuses (1) aufnimmt; und wobei das Befestigungsmittel (13 .. 18) aus einem dielektrischen Material besteht, das das Installationsgehäuse (1) zumindest teilweise ausfüllt, wobei das Installationsgehäuse (1) eine Mehrzahl von Gehäusewänden (2 .. 4, 20, 21) umfasst oder durch diese gebildet wird, eine Gehäusewand der Mehrzahl der Gehäusewände (2 .. 4, 20, 21) zumindest teilweise aus nichtmetallischem Material besteht, und das Befestigungsmittel (13 .. 18) flächig mit der einen Gehäusewand verbunden ist, wobei die Permittivität des dielektrischen Materials sich in Richtung einer Oberflächennormalen der einen Gehäusewand kontinuierlich oder stufenweise erhöht oder verringert, und **dadurch gekennzeichnet, dass** das Befestigungsmittel (13 .. 18) eine trichterförmige Einführungsöffnung (28) für das elektronische Gerät (12) aufweist.

2. Installationsgehäuseanordnung nach Anspruch 1, wobei das Installationsgehäuse (1) einen Reflektor zum Reflektieren eines Funksignals umfasst.

3. Installationsgehäuseanordnung nach Anspruch 1 oder 2, wobei die eine Gehäusewand von dem Installationsgehäuse (1) abnehmbar ist.

4. Installationsgehäuseanordnung nach einem der Ansprüche 1 bis 3, wobei die eine Gehäusewand ein Fenster oder einen Schlitz (S) zum Aussenden eines Funksignals aufweist.

5. Installationsgehäuseanordnung nach einem der Ansprüche 1 bis 4, wobei die eine Gehäusewand mindestens einen Vorsprung (26) aufweist, der von einer Außenfläche des Installationsgehäuses (1) hervorsteht, und wobei der mindestens eine Vorsprung (26) aus einem dielektrischen Material mit einer Permittivität besteht, die mindestens so groß ist wie die Permittivität des dielektrischen Materials des Befestigungsmittels (13 .. 18).

6. Installationsgehäuseanordnung nach Anspruch 5, wobei der mindestens eine Vorsprung (26) einen Querschnitt aufweist, der sich mit zunehmender Eindringtiefe in die Gebäudestruktur verkleinert.

7. Installationsgehäuseanordnung nach Anspruch 4 in Kombination mit Anspruch 5 oder 6, wobei der mindestens eine Vorsprung (26) an dem Fenster oder dem Schlitz (S) angeordnet ist.

8. Installationsgehäuseanordnung nach einem der vorhergehenden Ansprüche, wobei das Befestigungsmittel (13 .. 18) mindestens ein herausnehmbares Teil umfasst, um das elektronische Gerät (12) an unterschiedlichen Positionen innerhalb des Installationsgehäuses (1) zu positionieren und/oder um das Befestigungsmittel (13 .. 18) an verschiedene Größen des elektronischen Geräts (12) anzupassen.

9. Installationsgehäuseanordnung nach einem der vorhergehenden Ansprüche, wobei das Installationsgehäuse (1) eine abnehmbare Abdeckung für die trichterförmige Einführungsöffnung (28) umfasst, wobei das Befestigungsmittel (13 .. 18) einen Verschlussstopfen zum Verschließen der trichterförmigen Einführungsöffnung (28) umfasst, und wobei vorzugsweise der Verschlussstopfen an der abnehmbaren Abdeckung befestigt ist.

10. Installationsgehäuseanordnung nach einem der vorhergehenden Ansprüche, wobei das Befestigungsmittel (13 .. 18) einen Hohlraum bildet, in den das elektronische Gerät (12) im Wesentlichen formschlüssig einsetzbar ist.

11. Installationsgehäuseanordnung nach einem der vorhergehenden Ansprüche, wobei das Installationsgehäuse (1) einen Wellenleiter zur Übertragung eines Funksignals umfasst, und wobei der Wellenleiter zumindest teilweise durch mindestens eine Gehäusewand der Mehrzahl der Gehäusewänden (2 .. 4, 20, 21) gebildet ist.

12. System, umfassend die Installationsgehäuseanordnung nach einem der vorhergehenden Ansprüche, wobei das Installationsgehäuse (1) ein elektronisches Gerät (12) mit einer Antenne aufnimmt; und die Antenne zum Senden und/oder Empfangen eines Funksignals mit einer Wellenlänge λ ausgebildet ist; und das Befestigungsmittel (13 .. 18) dazu ausgelegt ist, das elektronische Gerät (12) so zu positionieren, dass die Antenne einen Mindestabstand von λ/4 zu mindestens einer inneren oder äußeren Wand des Installationsgehäuses (1) aufweist.

## Revendications

1. Agencement de boîtier d'installation destiné à loger un dispositif électronique, comprenant un boîtier d'installation (1) conçu pour être installé dans une structure de bâtiment ou un équipement technique de bâtiment (22) ; le boîtier d'installation (1) accueillant un moyen de fixation (13 .. 18) pour fixer et positionner le dispositif électronique (12) à l'intérieur du boîtier d'installation (1) ; et le moyen de fixation (13 .. 18) étant constitué d'un matériau diélectrique qui remplit au moins partiellement le boîtier d'installation (1), ledit boîtier d'installation (1) étant formé d'une pluralité de parois (2 .. 4, 20, 21), dont l'une est au moins partiellement réalisée en matériau non métallique, le moyen de fixation (13 .. 18) étant relié en couche mince à ladite paroi, la permittivité du matériau diélectrique augmentant ou diminuant de manière continue ou graduelle dans la direction de la normale à la surface de ladite paroi, et **caractérisé en ce que** le moyen de fixation (13 .. 18) comporte une ouverture d'insertion en forme d'entonnoir (28) pour le dispositif électronique (12).

2. Agencement de boîtier d'installation selon la revendication 1, dans lequel le boîtier d'installation (1) comporte un réflecteur pour réfléchir un signal radio.

3. Agencement de boîtier d'installation selon la revendication 1 ou 2, dans lequel ladite paroi est amovible du boîtier d'installation (1).

4. Agencement de boîtier d'installation selon l'une des revendications 1 à 3, dans lequel ladite paroi comporte une fenêtre ou une fente (S) pour l'émission d'un signal radio.

5. Agencement de boîtier d'installation selon l'une des revendications 1 à 4, dans lequel ladite paroi comporte au moins une saillie (26) conçue pour faire saillie à partir d'une surface extérieure du boîtier d'installation (1), et ladite saillie (26) est constituée d'un matériau diélectrique dont la permittivité est égale ou supérieure à celle du matériau diélectrique du moyen de fixation (13 .. 18).

6. Agencement de boîtier d'installation selon la revendication 5, dans lequel ladite saillie (26) présente un périmètre qui diminue avec la profondeur de pénétration dans la structure de bâtiment.

7. Agencement de boîtier d'installation selon la revendication 4, en combinaison avec la revendication 5 ou 6, dans lequel ladite saillie (26) est disposée au niveau de la fenêtre ou de la fente (S).

8. Agencement de boîtier d'installation selon l'une des revendications précédentes, dans lequel le moyen de fixation (13 .. 18) comprend au moins un élément amovible pour positionner le dispositif électronique (12) à différentes positions à l'intérieur du boîtier d'installation (1) et/ou pour adapter le moyen de fixation (13 .. 18) à différentes tailles dudit dispositif électronique (12).

9. Agencement de boîtier d'installation selon l'une des revendications précédentes, dans lequel le boîtier d'installation (1) comprend un couvercle amovible pour l'ouverture d'insertion en forme d'entonnoir (28) ; le moyen de fixation (13 .. 18) comprend un bouchon de fermeture destiné à obturer l'ouverture d'insertion en forme d'entonnoir (28) ; et, de préférence, le bouchon de fermeture est fixé audit couvercle amovible.

10. Agencement de boîtier d'installation selon l'une des revendications précédentes, dans lequel le moyen de fixation (13 .. 18) forme une cavité dans laquelle le dispositif électronique (12) peut être inséré de manière sensiblement ajustée.

11. Agencement de boîtier d'installation selon l'une des revendications précédentes, dans lequel le boîtier d'installation (1) comprend un guide d'ondes pour transmettre un signal radio, et ce guide d'ondes est formé au moins en partie par l'une des parois de ladite pluralité de parois (2 .. 4, 20, 21).

12. Système comprenant l'agencement de boîtier d'installation selon l'une des revendications précédentes, dans lequel le boîtier d'installation (1) accueille un dispositif électronique (12) comprenant une antenne ; et l'antenne est configurée pour émettre et/ou recevoir un signal radio de longueur d'onde λ ; et le moyen de fixation (13 .. 18) est configuré pour positionner le dispositif électronique (12) de sorte que l'antenne présente une distance minimale de λ/4 par rapport à au moins une paroi intérieure ou extérieure du boîtier d'installation (1).
